# EUROPÄISCHE PATENTSCHRIFT

(11) **EP 1 582 891 B1**
(45) Veröffentlichungstag und Bekanntmachung des Hinweises auf die Patenterteilung: **18.12.2019**
(21) Anmeldenummer: 05002547.7
(22) Anmeldetag: 07.02.2005
(51) Int. Cl.: G01V 8/20

(54) **Sensoranordnung**
Sensor arrangement
Ensemble capteur

(30) Priorität: 01.04.2004 US 817445
(43) Veröffentlichungstag der Anmeldung: 05.10.2005
(73) Patentinhaber: Vishay Semiconductor GmbH, 74072 Heilbronn (DE)
(72) Erfinder: Schmidt, Manuel, Dr., 68753 Waghäusel (DE); Figueria, Robert, San Jose California 951247 (US)
(74) Vertreter: Manitz Finsterwald Patent- und Rechtsanwaltspartnerschaft mbB

(56) Entgegenhaltungen:
- JP-A- 61 134 082
- US-A- 4 752 799
- US-A- 5 103 085
- US-A- 5 955 854
- US-A- 6 111 248
- US-A1- 2003 020 004
- US-A1- 2003 189 618

## Beschreibung

Die vorliegende Erfindung betrifft eine Sensoranordnung, insbesondere als Teil einer Reflexionslichtschranke, mit einem Träger, auf welchem eine Fotodiode, eine erste Leuchtdiode zur Aussendung eines insbesondere gepulsten Messlichtstrahls und eine zweite Leuchtdiode zur Aussendung eines insbesondere zum Messlichtstrahl zeitversetzt gepulsten Referenzlichtstrahls sowie ein die Fotodiode und die beiden Leuchtdioden umschließendes, lichtdurchlässiges Gehäuse angeordnet sind.

Bei einer bekannten Sensoranordnung für Reflexionslichtschranken dieser Art sind auf einer Platine zwei LED-Chips und ein Fotodiodenchip angeordnet. Der zur Aussendung des Referenzlichtstrahls vorgesehene LED-Chip bestrahlt die benachbarte Fotodiode direkt, wobei ein großer Teil des Lichtes, bedingt durch die Lage beider Chips auf einer Ebene, in die Seitenfläche der Fotodiode eingestrahlt wird. Der andere für die Aussendung des Nutzlichtstrahls vorgesehene LED-Chip strahlt dagegen nur nach oben ab, da er sich in einem separaten Teil des Gehäuses befindet. Wenn sich ein reflektierendes Objekt in seinem Strahlkegel befindet, trifft das reflektierte Licht von oben auf die Fotodiode auf.

Bei der Bestrahlung einer Fotodiode mit einem Lichtpuls folgt der aus der Bestrahlung der Fotodiode resultierende Fotostrom dem Lichtpuls mit einer gewissen Verzögerung, die durch die Anstiegs- und Abfallzeit des Fotostroms quantifiziert wird. Im Allgemeinen hängen diese Zeiten sowohl von den elektrischen Parametern der Fotodiode, vor allem ihrer Kapazität, und ihrer äußeren elektrischen Beschaltung, im Wesentlichen vom Lastwiderstand, ab. Weiterhin besteht jedoch eine deutliche Abhängigkeit von der Richtung der optischen Bestrahlung. Trifft das Licht nicht in erster Linie von oben auf den Halbleiterchip, sondern dringt es durch die Seitenflächen in den Chip ein, so kommt es zu einer deutlichen Erhöhung der Anstiegs- und Abfallzeit. Die Fotodiode wird also langsamer. Grund ist hier wahrscheinlich folgender: bei der seitlichen Einstrahlung findet ein großer Teil der durch Absorption des Lichtes hervorgerufenen Erzeugung von freien Ladungsträgerpaaren im Substrat des Chips statt. Ehe diese Ladungsträgerpaare zu einem elektrischen Strom beitragen können, müssen sie erst in den Bereich des pn-Übergangs diffundieren, was zu einer Verzögerung führt.

In der konkreten Anwendung werden beide LED-Chips abwechselnd gepulst betrieben, wodurch mit Hilfe einer elektronischen Schaltung die Umgebungslichtempfindlichkeit der Reflexionslichtschranke eliminiert werden kann. Hierbei verursacht das unterschiedliche Zeitverhalten für die Lichteinstrahlung auf die Fotodiode von der Seite bzw. von oben für große Probleme für die Auswertungselektronik.

Aus US 4 752 799 A ist eine Sensoranordnung mit den Merkmalen des Oberbegriffs des Anspruchs 1 bekannt.

Aus US 5 103 085 A und US 2003/0189618 A1 sind weitere Sensoranordnungen bekannt, die eine Fotodiode, eine erste Leuchtdiode und eine zweite Leuchtdiode aufweisen.

Die vorstehend erläuterten Probleme werden durch eine Sensoranordnung mit den Merkmalen von Anspruch 1 gelöst. Demnach besteht die Lösung in einer Sensoranordnung, insbesondere als Teil einer Reflexionslichtschranke, mit einem Träger, auf welchem eine Fotodiode, eine erste Leuchtdiode zur Aussendung eines insbesondere gepulsten Messlichtstrahls und eine zweite Leuchtdiode zur Aussendung eines insbesondere zum Messlichtstrahl zeitversetzt gepulsten Referenzlichtstrahls sowie ein die Fotodiode und die beiden Leuchtdioden umschließendes, lichtdurchlässiges Gehäuse angeordnet sind, die dadurch gekennzeichnet ist, dass die zweite Leuchtdiode derart auf dem Träger angeordnet ist, dass das von ihr ausgesandte Referenzlicht im Wesentlichen nicht seitlich auf die Fotodiode trifft.

Das von der zweiten Leuchtdiode ausgesandte Referenzlicht beaufschlagt die Fotodiode also im Wesentlichen lediglich entlang eines indirekten Referenzlichtpfads. Hierbei trifft das von der zweiten Leuchtdiode ausgesandte Referenzlicht im Wesentlichen aufgrund von Reflexion an der Wand des Gehäuses auf die Fotodiode, wobei diese Reflexion auf einer Totalreflexion beruht.

Gemäß einer besonders bevorzugten Ausgestaltung der Erfindung ist die Fotodiode auf einer ersten Ebene des Trägers angeordnet und die zur Referenzlichtausstrahlung dienende zweite Leuchtdiode auf einer zweiten Ebene. Dies ist besonders einfach in der Herstellung und genügt insbesondere dann bereits allein zur weitgehenden Vermeidung einer seitlichen Einstrahlung von Referenzlicht in die Fotodiode, wenn die beiden Ebenen mindestens um die Höhe der Fotodiode bzw. der zweiten Leuchtdiode gegeneinander versetzt sind. Die Einstrahlung von Referenzlicht auf die Fotodiode kann dadurch nur noch über Reflexion an den Wänden des Gehäuses erfolgen, so dass die Einstrahlung im Wesentlichen von oben auf die Fotodiode erfolgt.

Die zweite Leuchtdiode ist bevorzugt auf einer höheren Ebene angeordnet als die Fotodiode. Grundsätzlich könnte die Anordnung aber auch umgekehrt sein.

Als Träger ist insbesondere eine Platine vorgesehen, wobei die Platine bevorzugt in Art einer mindestens zweilagigen Sandwichplatine ausgebildet ist. Auch dies ist wiederum von der Herstellung her einfach und kostengünstig. Die Herstellung der Lagen erfolgt insbesondere durch Laminieren.

Besonders bevorzugt ist es außerdem, wenn der Träger aus einem lichtundurchlässigen Material besteht. Damit können auch andere störende Einstrahlungen auf die Fotodiode verhindert werden.

Das Gehäuse ist bevorzugt durch eine Einbettmasse aus lichtdurchlässigem Material wie Epoxydharz gebildet. Dieses Material hat sich als besonders geeignet herausgestellt, um sowohl eine Durchstrahlung des Messlichtes zu einem zu erfassenden Objekt als auch eine Reflexion des Referenzlichtes am Gehäuse zu gewährleisten.

Zur Verbesserung der Reflexion an den Wänden des Gehäuses und zur Verhinderung einer Erfassung eines Objektes durch das Referenzlicht kann das Gehäuse im Bereich der zweiten Leuchtdiode bevorzugt abgeschrägt ausgebildet sein. Vor der ersten Leuchtdiode ist andererseits bevorzugt eine Linse zur Fokussierung des Messlichts in Richtung auf ein mögliches zu erfassendes Objekt vorgesehen.

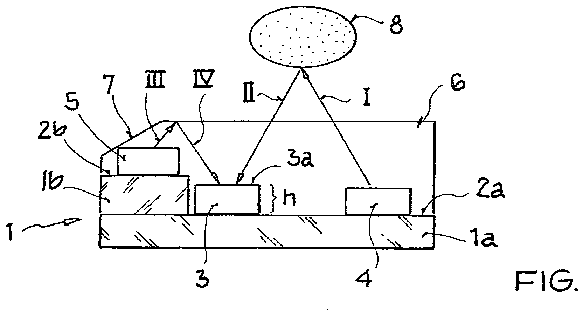

Ein Ausführungsbeispiel der Erfindung ist in der Zeichnung dargestellt und wird nachfolgend beschrieben. Als einzige Figur zeigt in schematischer Darstellung
- Fig. 1: einen Querschnitt durch eine erfindungsgemäße Sensoranordnung.

Die dargestellte Sensoranordnung umfasst als Träger eine Platine 1 mit einer ersten Lage 1a und einer darauf laminierten zweiten Lage 1b, die allerdings nur einen Teil der ersten Lage 1a überdeckt. Dadurch sind für den Träger zwei Ebenen 2a und 2b gebildet.

Auf der ersten Ebene 2a sind nebeneinander eine Fotodiode 3 und eine erste Leuchtdiode 4 angeordnet, während auf der zweiten Ebene 2b eine zweite Leuchtdiode 5 vorgesehen ist. Die Fotodiode 3 befindet sich direkt neben der zweiten Lage 1b des Trägers 1, und die Höhe der zweiten Lage 1b ist etwas größer gewählt als die Höhe der Fotodiode 3. Die erste Leuchtdiode 4 befindet sich mit Abstand auf der von der zweiten Leuchtdiode 5 abgewandten Seite der Fotodiode 3.

Auf die Platine 1 ist eine Einbettmasse aus einem Epoxydharz aufgebracht, die ein Gehäuse 6 bildet, welches die Fotodiode 3 und die beiden Leuchtdioden 4 und 5 aufnimmt. Die erste Leuchtdiode 4 befindet sich dabei in einem separaten Bereich des Gehäuses 6, der durch eine hier nicht dargestellte Übersprechbarriere von der Fotodiode 3 und der zweiten Leuchtdiode 5 getrennt ist, so dass von der ersten Leuchtdiode 4 ausgesandtes Licht nicht seitlich auf die Fotodiode 3 treffen kann. Vor der ersten Leuchtdiode 4 ist außerdem eine hier ebenfalls nicht dargestellte Linse angeordnet. Auf der anderen Seite ist das Gehäuse 6 im Bereich der zweiten Leuchtdiode 5 mit einer Schrägfläche 7, einer so genannten Facette, ausgebildet.

Die erste Leuchtdiode 4 dient zur Erzeugung von Messlicht, welches aus dem Gehäuse 6 austritt und durch ein sich vor dem Gehäuse 6 befindliches Objekt 8 reflektiert wird. Dadurch gelangt das von der ersten Leuchtdiode 4 ausgesandte Messlicht gemäß den Pfeilen I und II auf die Oberseite 3a der Fotodiode 3 und erzeugt in dieser ein elektrisches Signal. Die Leuchtdiode 4 wird dabei getaktet betrieben.

Zeitversetzt hierzu wird die zweite Leuchtdiode 5 aktiviert. Diese sendet einen Referenzlichtstrahl aus, der an den Wänden des Gehäuses 6 derart reflektiert wird, dass er gemäß den Pfeilen III und IV auf die Oberseite 3a der Fotodiode 3 reflektiert wird. Durch Subtraktion der beiden Signale kann das Umgebungslicht herausgerechnet werden. Zusätzlich kann das von der zweiten Leuchtdiode 5 erzeugte Referenzlichtsignal für eine Regelung verwendet werden.

Wie man erkennt, verhindert die Anordnung der zweiten Leuchtdiode 5 auf der durch die zweite Lage 1b der Trägerplatine 1 gebildeten zweiten Ebene 2b ein seitliches Einstrahlen von Referenzlicht in die Fotodiode 3. Das Referenzlicht strahlt daher wie das reflektierte Messlicht im Wesentlichen nur von oben auf die Fotodiode 3 ein. Damit entspricht das Zeitverhalten des Referenzlichtsignals demjenigen des Messlichtsignals in der Fotodiode 3, wodurch die eingangs beschriebenen Probleme vermieden werden. Insbesondere können auf diese Weise geringe Anstiegs- und Abfallzeiten der Fotodiode 3 auch bezüglich des Referenzlichts erreicht werden.

Durch die Ausbildung der beiden Lagen 1a und 1b der Trägerplatine 1 aus einen lichtundurchlässigen Material kann auch sonstiges Fehllicht weitgehend ausgeschlossen werden.

### Bezugszeichenliste

- 1: Trägerplatine
- 1a: erste Lage von 1
- 1b: zweite Lage von 1
- 2a: erste Ebene
- 2b: zweite Ebene
- 3: Fotodiode
- 3a: Oberseite von 3
- 4: erste Leuchtdiode
- 5: zweite Leuchtdiode
- 6: Gehäuse
- 7: Facette
- 8: Objekt
- I: Strahlrichtung
- II: Strahlrichtung
- III: Strahlrichtung
- IV: Strahlrichtung
- h: Höhe von 3

## Patentansprüche

1. Sensoranordnung, insbesondere als Teil einer Reflexionslichtschranke, mit einem Träger (1), auf welchem eine Fotodiode (3), eine erste Leuchtdiode (4) zur Aussendung eines gepulsten Messlichtstrahls und eine zweite Leuchtdiode (5) zur Aussendung eines zum Messlichtstrahl zeitversetzt gepulsten Referenzlichtstrahls sowie ein die Fotodiode (3) und die beiden Leuchtdioden (4, 5) umschließendes, lichtdurchlässiges Gehäuse (6) angeordnet sind, wobei die zweite Leuchtdiode (5) derart auf dem Träger (1) angeordnet ist, dass das von ihr ausgesandte Referenzlicht im Wesentlichen nicht seitlich auf die Fotodiode (3) trifft,
**dadurch gekennzeichnet,**
**dass** der von der zweiten Leuchtdiode (5) ausgesandte Referenzlichtstrahl im Wesentlichen aufgrund von Totalreflexion an der Wand des Gehäuses (6) auf die Fotodiode (3) trifft.

2. Sensoranordnung nach Anspruch 1,
**dadurch gekennzeichnet,**
**dass** die Fotodiode (3) auf einer ersten Ebene (2a) des Trägers (1) und die zweite Leuchtdiode (5) auf einer zweiten Ebene (2b) des Trägers (1) angeordnet ist.

3. Sensoranordnung nach Anspruch 2,
**dadurch gekennzeichnet,**
**dass** die beiden Ebenen (2a, 2b) mindestens um die Höhe (h) der Fotodiode (3) bzw. die Höhe der zweiten Leuchtdiode (5) gegeneinander versetzt sind.

4. Sensoranordnung nach Anspruch 2 oder 3,
**dadurch gekennzeichnet,**
**dass** die zweite Leuchtdiode (5) bezogen auf eine Strahlrichtung (III) des ausgesandten Referenzlichtstrahls auf einer höheren Ebene (2b) angeordnet ist als die Fotodiode (3).

5. Sensoranordnung nach einem der vorhergehenden Ansprüche **dadurch gekennzeichnet,**
**dass** als Träger (1) eine Platine vorgesehen ist.

6. Sensoranordnung nach Anspruch 5,
**dadurch gekennzeichnet,**
**dass** die Platine (1) in Art einer mindestens zweilagigen SandwichPlatine ausgebildet ist.

7. Sensoranordnung nach Anspruch 6,
**dadurch gekennzeichnet,**
**dass** die Lagen (1a, 1b) der Trägerplatine (1) aufeinander laminiert sind.

8. Sensoranordnung nach einem der vorhergehenden Ansprüche,
**dadurch gekennzeichnet,**
**dass** der Träger (1) aus einem lichtundurchlässigen Material besteht.

9. Sensoranordnung nach einem der vorhergehenden Ansprüche,
**dadurch gekennzeichnet,**
**dass** das Gehäuse (6) durch eine Einbettmasse aus lichtdurchlässigem Material wie Epoxydharz gebildet ist.

10. Sensoranordnung nach einem der vorhergehenden Ansprüche,
**dadurch gekennzeichnet,**
**dass** das Gehäuse (6) im Bereich der zweiten Leuchtdiode (5) mit einer abgeschrägten Wand, nämlich einer so genannten Facette (7) ausgebildet ist.

11. Sensoranordnung nach einem der vorhergehenden Ansprüche,
**dadurch gekennzeichnet,**
**dass** vor der ersten Leuchtdiode (4) eine Linse zur Fokussierung des Nutzlichtes angeordnet ist.

## Claims

1. A sensor arrangement, in particular as part of a reflection light barrier, comprising a carrier (1) on which a photodiode (3), a first light emitting diode (4) for emitting a pulsed measuring light beam, a second light emitting diode (5) for emitting a reference light beam pulsed offset in time with respect to the measuring light beam and a light permeable housing (6) enclosing the photodiode (3) and the two light emitting diodes (4, 5) are arranged, wherein the second light emitting diode (5) is arranged on the carrier (1) such that the reference light emitted by it is essentially not laterally incident on the photodiode (3),
**characterized in that**
the reference light beam emitted by the second light emitting diode (5) is essentially incident on the photodiode (3) due to total reflection at the wall of the housing (6).

2. A sensor arrangement in accordance with claim 1,
**characterized in that**
the photodiode (3) is arranged on a first plane (2a) of the carrier (1) and the second light emitting diode (5) is arranged on a second plane (2b) of the carrier (1).

3. A sensor arrangement in accordance with claim 2,
**characterized in that**
the two planes (2a, 2b) are offset with respect to one another at least by the height (h) of the photodiode (3) or by the height of the second light emitting diode (5).

4. A sensor arrangement in accordance with claim 2 or claim 3,
**characterized in that**
the second light emitting diode (5) is arranged on a higher plane (2b) than the photodiode (3) with respect to a beam direction (III) of the emitted reference light beam.

5. A sensor arrangement in accordance with any one of the preceding claims,
**characterized in that**
a circuit board is provided as the carrier (1).

6. A sensor arrangement in accordance with claim 5,
**characterized in that**
the circuit board (1) is formed in the manner of a sandwich board of at least two layers.

7. A sensor arrangement in accordance with claim 6,
**characterized in that**
the layers (1a, 1b) of the carrier board (1) are laminated onto one another.

8. A sensor arrangement in accordance with any one of the preceding claims,
**characterized in that**
the carrier (1) consists of a material impermeable to light.

9. A sensor arrangement in accordance with any one of the preceding claims,
**characterized in that**
the housing (6) is formed by an encapsulant composed of a material permeable to light such as epoxy resin.

10. A sensor arrangement in accordance with any one of the preceding claims,
**characterized in that**
the housing (6) is formed with a chamfered wall, namely with a so-called facet (7), in the region of the second light emitting diode (5).

11. A sensor arrangement in accordance with any one of the preceding claims,
**characterized in that**
a lens for focusing the useful light is arranged in front of the first light emitting diode (4).

## Revendications

1. Agencement de capteur, en particulier faisant partie d'une barrière photoélectrique à réflexion, comprenant un support (1) sur lequel sont disposés une photodiode (3), une première diode électroluminescente (4) servant à émettre un faisceau lumineux de mesure pulsé (10) et une deuxième diode électroluminescente (5) servant à émettre un faisceau lumineux de référence pulsé, décalé dans le temps par rapport au faisceau lumineux de mesure, et un boîtier translucide (6) entourant la photodiode (3) et les deux diodes électroluminescentes (4, 5), la deuxième diode électroluminescente (5) étant disposée sur le support (1) de telle sorte que la lumière de référence qu'elle émet n'atteint essentiellement pas la photodiode (3) latéralement,
**caractérisé en ce**
**que** le faisceau lumineux de référence émis par la deuxième diode (5) atteint la photodiode (3) essentiellement en raison d'une réflexion totale sur la paroi du boîtier (6).

2. Agencement de capteur selon la revendication 1,
**caractérisé en ce**
**que** la photodiode (3) est disposée sur un premier plan (2a) du support (1) et la deuxième diode électroluminescente (5) sur un deuxième plan (2b) du support (1).

3. Agencement de capteur selon la revendication 2,
**caractérisé en ce**
**que** les deux plans (2a, 2b) sont décalés l'un par rapport à l'autre d'au moins la hauteur (h) de la photodiode (3) ou la hauteur de la deuxième diode électroluminescente (5).

4. Agencement de capteur selon la revendication 2 ou 3,
**caractérisé en ce**
**que** la deuxième diode électroluminescente (5) est disposée sur un plan plus élevé (2b) que la photodiode (3) par rapport à une direction de faisceau (III) du faisceau lumineux de référence émis.

5. Agencement de capteur selon l'une des revendications précédentes,
**caractérisé en ce**
**qu'**une carte de circuit imprimé est prévue comme support (1).

6. Agencement de capteur selon la revendication 5,
**caractérisé en ce**
**que** la carte de circuit imprimé (1) est réalisée sous la forme d'une carte de circuit imprimé en sandwich à au moins deux couches.

7. Agencement de capteur selon la revendication 6,
**caractérisé en ce**
**que** les couches (1a, 1b) de la carte de circuit imprimé support (1) sont stratifiées les unes sur les autres.

8. Agencement de capteur selon l'une des revendications précédentes,
**caractérisé en ce**
**que** le support (1) est constitué d'un matériau opaque.

9. Agencement de capteur selon l'une des revendications précédentes,
**caractérisé en ce**
**que** le boîtier (6) est formé d'une matière d'enrobage en matériau translucide tel que de la résine époxy.

10. Agencement de capteur selon l'une des revendications précédentes,
**caractérisé en ce**
**que** le boîtier (6) est formé dans la zone de la deuxième diode électroluminescente (5) avec une paroi biseautée, à savoir ce que l'on appelle une facette (7).

11. Agencement de capteur selon l'une des revendications précédentes,
**caractérisé en ce**
**qu'**une lentille pour focaliser la lumière utile est disposée devant la première diode électroluminescente (4).
